# EUROPEAN PATENT SPECIFICATION

(11) **EP 2 642 646 B1**
(45) Date of publication and mention of the grant of the patent: **12.12.2018**
(21) Application number: 12160339.3
(22) Date of filing: 20.03.2012
(51) Int. Cl.: H02K 15/02

(54) **Method for manufacturing a stator**
Verfahren zur Herstellung eines Stators
Procédé de fabrication d'un stator

(43) Date of publication of application: 25.09.2013
(73) Proprietor: General Electric Technology GmbH, 5400 Baden (CH)
(72) Inventor: Hediger, Daniel, 5504 Othmarsingen (CH)
(74) Representative: General Electric Technology GmbH

(56) References cited:
- EP-A2- 0 320 252
- DE-A1- 3 925 337
- US-A1- 2005 236 924
- US-B1- 6 321 439

## Description

### TECHNICAL FIELD

The present disclosure relates to a method for manufacturing a stator.

The stator is preferably a component of a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

### BACKGROUND

Rotating electric machines such as turbogenerators comprise a stator and a rotor. The stator comprises a plurality of annular steel laminations slightly insulated from one another and defining a bore (stator bore) in which the rotor is housed. The laminations have fingers defining slots wherein stator bars are housed.

In order to manufacture the stator, it is known to stack the laminations one by one and to provide thick aluminium press plates at the stator ends (the thickness is usually about 100/300 millimetres) in order to tighten the laminations with the help of tension bars. Press fingers arranged between the aluminium press plate and the laminations provide pretension into the stator fingers.

Manufacturing of the stator using this method is very time consuming and thus costly.

US 6 321 439 discloses a method for manufacturing a stator according to claim 1 except that the first and second pre-assembled lamination blocks do not comprise end plates and that laminations are not stacked after stacking the first pre-assembled lamination block to define a pile. This method has the drawback that handling the modules is troubling because of their weight and dimension.

### SUMMARY

The invention provides a method according to claim 1 that permits manufacturing of a stator in a relatively short time (when compared to known methods for example consisting of stacking the laminations one by one) and at the same time allowing an easy handling of the elements to be stacked, this handling being generally easier than handling of the modules of US 6 321 439.

These and further aspects are attained by providing a method in accordance with the accompanying claims.

### BRIEF DESCRIPTION OF THE DRAWINGS

Further characteristics and advantages will be more apparent from the description of a preferred but non-exclusive embodiment of the method and stator, illustrated by way of non-limiting example in the accompanying drawings, in which:
Figure 1 is a schematic view of a pre-assembled lamination block,
Figure 2 is a cross section through line II-II of figure 1;
Figure 3 is a view of a lamination of the pre-assembled lamination block;
Figure 4 is a schematic view of a different pre-assembled lamination block,
Figure 5 is a cross section through line V-V of figure 4;
Figure 6 is a side view of a stator;
Figures 7-13 show the steps of an embodiment of the method to manufacture the stator,
Figures 14-21 show the steps of another embodiment of the method to manufacture the stator;
Figures 22-27 show the steps of a method for manufacturing a pre-assembled lamination block, and
Figures 28-30 show different embodiments of cooling schemes of the pre-assembled lamination blocks.

### DETAILED DESCRIPTION OF EXEMPLARY EMBODIMENTS

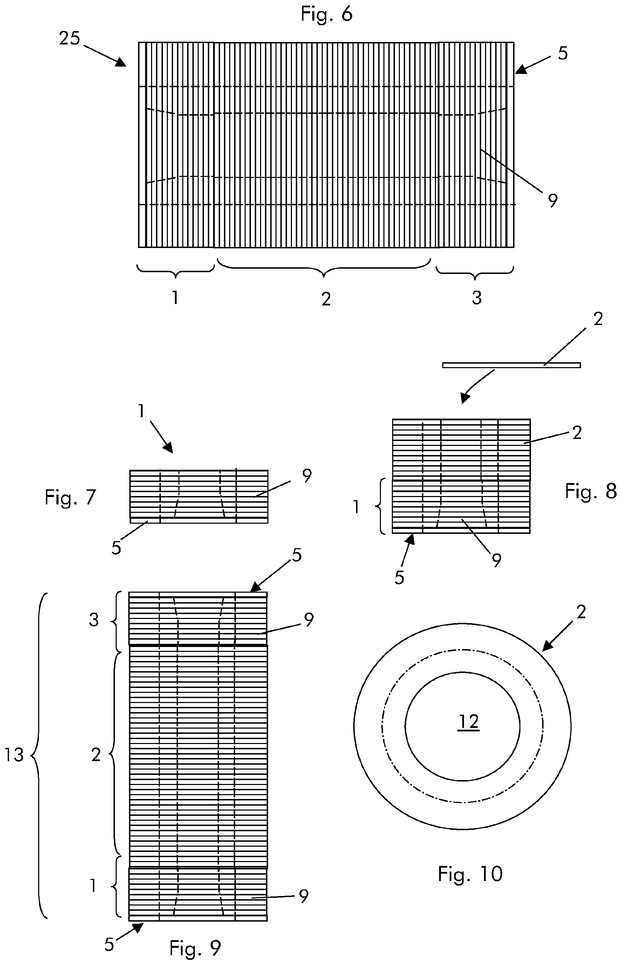

With reference to figures 7-13 and 14-21, the method for manufacturing a stator comprises providing a first pre-assembled lamination block 1, a plurality of laminations 2 and a second pre-assembled lamination block 3.

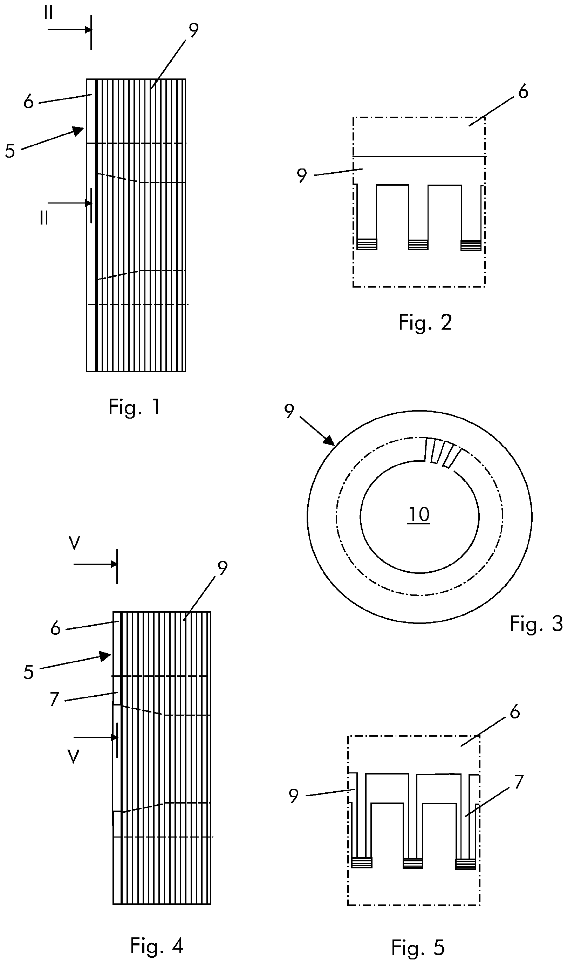

The first pre-assembled lamination block 1 (figure 1 and 4) comprises an end plate 5 for example made of aluminium or aluminium alloy; in a first embodiment this end plate 5 only has an annular part 6 (figures 1, 2). In a different embodiment (figures 4, 5) the end plate 5 has the annular part 6 with protruding fingers 7. The end plate 5 operates as a screening shield against electromagnetic fields.

The end plate 5 is connected to a plurality of laminations 9; the laminations 9 can be similar (i.e. they can have the same mechanical and/or thermal and/or electrical and/or geometrical features as the laminations 2 or one or more of the features thereof can differ from the corresponding features of the laminations 2. The laminations 9 have a substantially annular shape with a hole 10. Preferably, the laminations 9 of the first pre-assembled lamination block 1 closer to the end plate 5 have a larger hole 10 (i.e. the diameter of the hole 10 of laminations 9 closer to the end plate 5 is larger). This way a conical stepped part is defined at the ends of the first pre-assembled lamination block 1; this conical stepped part helps damping the magnetic flux during operation. In addition, some of the laminations 9 farther from the end plate 5 (i.e. those laminations 9 located at the opposite side of the first pre-assembled lamination block 1 with respect to the end plate 5) preferably have the same geometrical features as the laminations 2 (in particular they can have the same diameter for the hole 10); this is anyhow not mandatory.

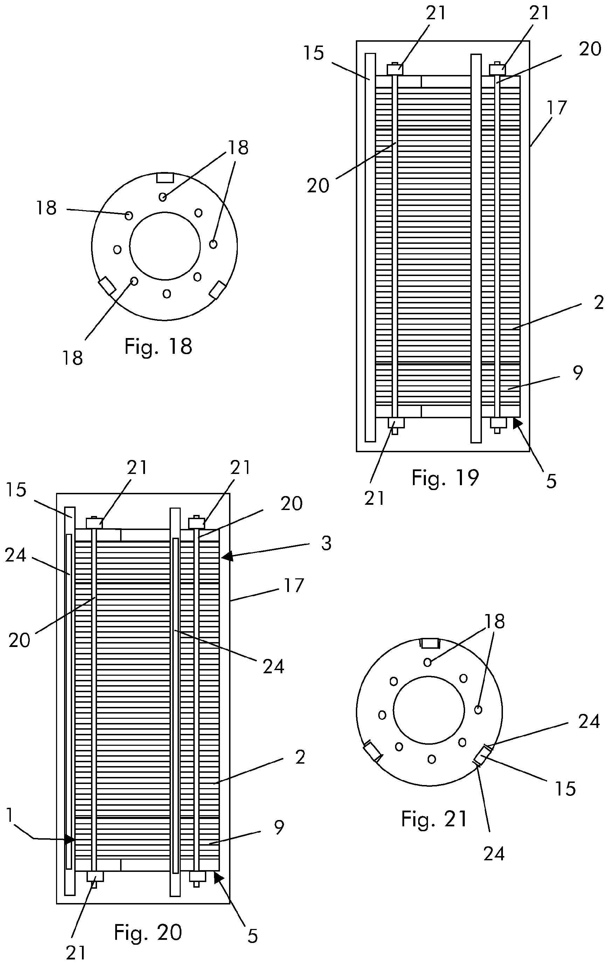

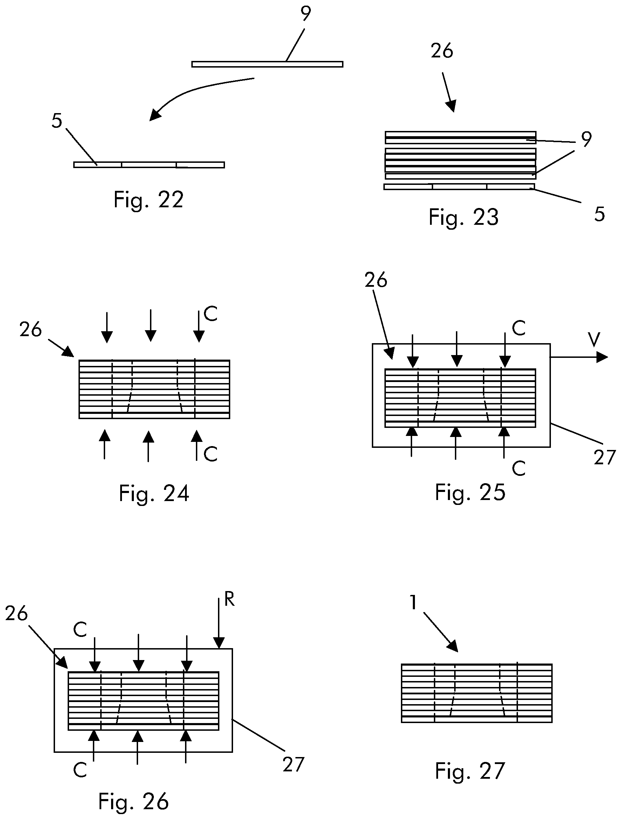

In order to manufacture the pre-assembled lamination block 1 (figures 20-25) the end plate 5 (with an annular structure) and a plurality of laminations 9 are stacked to form a stacking 26 (figure 23 shows the stacking 26 with the end plate 5 and laminations 9 still slack); the stacking 26 is thus impregnated with a resin (figure 26) and the resin is cured. Preferably, before and/or during impregnation and curing the stacking 26 is compressed (arrows C, figures 24-26) .

Impregnating includes inserting the stacking 26 in a tank 27, making a vacuum V in the tank 27 (figure 25) and providing the resin R (figure 26).

Figure 27 shows the pre-assembled lamination block 1.

The laminations 2 have an annular shape with a hole 12. The hole 12 of different laminations 2 can be the same, but in different embodiments it can change according to the particular stator design (for example laminations 2 with a slightly smaller diameter can be alternated to laminations 2 with a slightly larger diameter, such that the holes 12 define a substantially comb like structure); anyhow the holes 12 of the laminations 2 define a substantially cylindrical bore.

The second pre-assembled lamination block 3 has the same features as the first pre-assembled lamination block 1 and it is thus not described in detail.

The method comprises stacking (preferably vertically stacking) the first pre-assembled lamination block 1, the laminations 2 and the second pre-assembled lamination block 3 to define a pile 13.

Then the pile 13 is tightened.

This method allows an easy and fast manufacturing of the stator end parts (for example without the need of providing and aligning press plates and press fingers, laminations with different hole diameter to define the stepped conical parts like in the known methods) and at the same time it allows an easy and fast handling of the laminations 2 to manufacture the centre part of the stator between the first and second pre-assembled lamination blocks 1, 3.

The laminations 2 are stacked one by one.

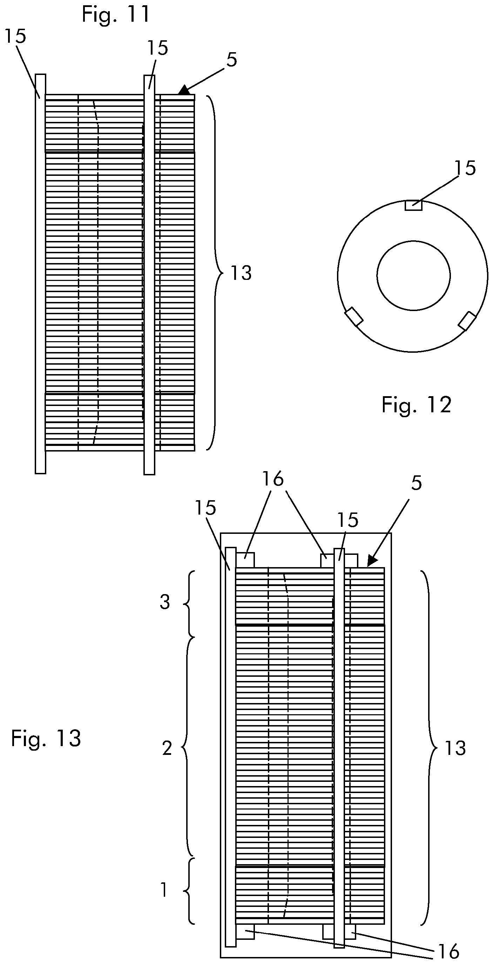

In a first example (figures 7-13), tightening comprises providing key bars 15 and connecting the pile 13 to the key bars 15 (figure 11).

For example, in order to connect the pile 13 to the key bars 15 lugs 16 can be provided (figure 13), such that the lugs 16 rest on sides of the first and/or second pre-assembled lamination blocks 1, 3 facing away from the laminations 2; the lugs 16 are thus connected to the key bars 15 (for example they are brazed or welded). In this case the key bars also have the function of keeping the first and second pre-assembled lamination blocks 1, 3 and the laminations 2 tightened.

Preferably the pile 13 is stacked vertically and the key bars 15 are provided with lugs 16 already connected to a part thereof when the key bars are connected to the pile 13. In particular, the lugs 16 that are already connected to the key bars 15 are located at the bottom of the pile 13. In this embodiment the key bars 15 are preferably welded to the laminations 2 and 9 for improving mechanical and electrical contact.

Then a casing 17 is provided around the pile 13 (figure 13).

In this case the key bars 15 are provided after stacking of the pre-assembled lamination blocks 1, 3 and laminations 2.

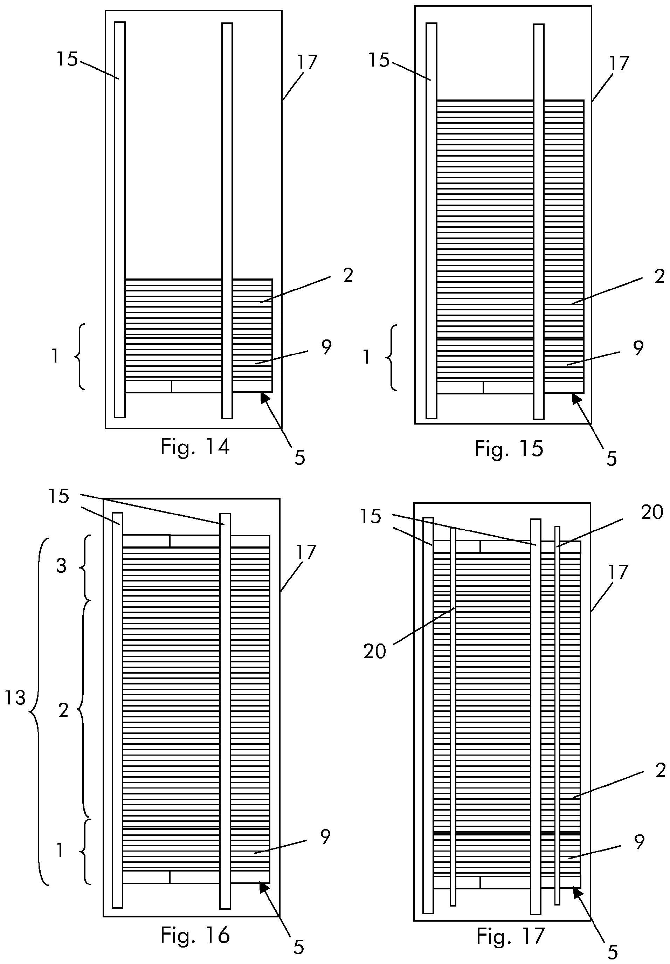

In a second example (figures 14-21), tightening comprises providing tension bars 20 through the pile (figure 17) with nuts 21 (figure 19). In this case the key bars 15 are typically provided anyway, but they are mainly used to align the laminations 2 and the first and second pre-assembled lamination blocks 1, 3.

In order to provide the tension bars 20, the laminations 2 and the first and second lamination blocks 1, 3 have holes 18 into which the tension bars 20 are inserted.

In addition, in this embodiment of the method preferably the pile 13 is formed within a casing 17 having key bars 15 (figures 14-16), and wedges 24 are put between the key bars 15 and the first pre-assembled lamination block 1 and/or laminations 2 and/or second pre-assembled lamination block 3 (figure 20); the wedges 24 help mechanical and electrical contact between the key bars 15 and the pile 13 and aligning of the first pre-assembled lamination block 1 and/or laminations 2 and/or second pre-assembled lamination block 3.

Figure 6 shows a stator manufactured with the method according to the description.

The stator 25 comprises the first pre-assembled lamination block 1, the laminations 2 and the second pre-assembled lamination block 3. The first and second pre-assembled lamination block 1, 3 include the end plate 5 and laminations 9. In addition, the first and second pre-assembled lamination blocks 1, 3 are impregnated with resin.

The end plate 5 of the first and second pre-assembled lamination block 1, 3 is thicker than the laminations 2 and 9 but it is smaller than the traditional press plate. For example the end plate 5 has a thickness of tens of millimetres, for example about 30 millimetres.

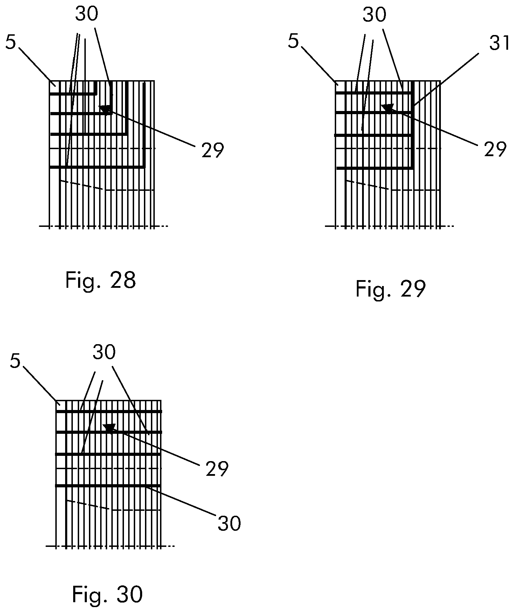

Figures 28-30 show particular embodiments of the blocks 1, 3.

A zone 29 beside the end plate 5 can be cooled by cooling channels 30, 31 having at least an axial portion, in order to avoid at least in a zone close or very close to the end plate 5 radial channels that could reduce stiffness of the block 1, 3. This solution is preferably used with blocks 1, 3 without fingers 7; anyhow it can also be used in the embodiment of blocks 1, 3 with fingers 7.

For example figure 28 shows an embodiment in which each cooling channels 30 has an axial and a radial portion, figure 29 shows an embodiment in which a plurality of axial channels 30 are connected to a radial channel 31 that is far apart from the end plate 5, and figure 30 shows an embodiment with axial channels 30 that are connected to corresponding axial channels (not shown) defined by the laminations 2. Naturally also combinations of the cooling schemes of figures 28-30 or other scheme other than those shown at figures 28-30 are possible.

In addition, also a cooling scheme with only radial cooling channels (pure radial cooling) can be provided. This scheme is preferably used with blocks 1, 3 with fingers 7; anyhow it is also possible with blocks 1, 3 without fingers.

In practice the materials used and the dimensions can be chosen at will according to requirements and to the state of the art.

### REFERENCE NUMBERS

- 1: pre-assembled lamination block
- 2: lamination
- 3: pre-assembled lamination block
- 5: end plate
- 6: annular part
- 7: finger
- 9: laminations
- 10: hole
- 12: hole
- 13: pile
- 15: key bars
- 16: lug
- 17: casing
- 18: hole
- 20: tension bar
- 21: nut
- 24: wedge
- 25: stator
- 26: stacking
- 27: tank
- 29: zone
- 30: channel
- 31: channel
- C: compression
- R: resin
- V: vacuum

## Claims

1. A method for manufacturing a stator comprising:
providing a first pre-assembled lamination block (1) comprising an end plate (5) and a plurality of laminations (9), the first pre-assembled lamination block (1) is manufactured by stacking an end plate (5) and a plurality of laminations (9) to form a stacking (26), impregnate the stacking (26) with a resin (R), curing the resin (R),
providing a plurality of laminations (2) to partly define a stator,
providing a second pre-assembled lamination block (3), the second pre-assembled lamination block (3) manufactured by stacking an end plate (5) and a plurality of laminations (9) to form a stacking (26), comprising an end plate (5) and a plurality of laminations (9), impregnate the stacking (26) with a resin (R), curing the resin (R);
stacking the first pre-assembled lamination block (1) first, next the laminations (2) one by one, and last the second pre-assembled lamination block (3) to define a pile (13),
tightening the pile (13),
wherein the end plate (5) of the first and second pre-assembled lamination block (1, 3) is thicker than each lamination (2, 9).

2. The method of claim 1, **characterised in that** tightening comprises providing key bars (15), connecting the pile (13) to the key bars (15).

3. The method of claim 2, **characterised by** further:
providing lugs (16) resting on sides of the first and/or second pre-assembled lamination blocks (1, 3) facing away from the laminations (2),
connecting the lugs (16) to the key bars (15).

4. The method of claim 2, **characterised in that** the pile (13) is stacked vertically,
key bars (15) are provided with lugs (16) already connected to a part thereof when the key bars (15) are connected to the pile (13), the lugs (16) already connected to the key bars (15) are located at the bottom of the pile (13).

5. The method of claim 2, **characterised by** providing a casing (17) around the pile (13).

6. The method of claim 1, **characterised in that** tightening comprises providing tension bars (20) through the pile (13).

7. The method of claim 6, **characterised by** forming the pile (13) within a casing (17) having key bars (15),
putting wedges (24) between the key bars (15) and the first pre-assembled lamination block (1) and/or laminations (2) and/or second pre-assembled lamination block (3).

8. The method of claim 7, **characterised in that** impregnating includes inserting the stacking (26) in a tank (27), making a vacuum (V) in the tank (27), providing the resin (R).

## Patentansprüche

1. Verfahren zur Herstellung eines Stators umfassend:
Bereitstellen eines ersten vormontierten Blechblocks (1), der eine Endplatte (5) und eine Vielzahl von Blechen (9) umfasst, wobei der erste vormontierte Blechblock (1) durch Stapeln einer Endplatte (5) und einer Vielzahl von Blechen (9), um einen Stapel (26) zu bilden, Imprägnieren des Stapels (26) mit einem Harz (R) und Härten des Harzes (R) hergestellt wird,
Bereitstellen einer Vielzahl von Blechen (2), um einen Stator teilweise zu definieren,
Bereitstellen eines zweiten vormontierten Blechblocks (3), wobei der zweite vormontierte Blechblock (3) durch Stapeln einer Endplatte (5) und einer Vielzahl von Blechen (9), um einen Stapel (26) zu bilden, die eine Endplatte (5) und eine Vielzahl von Blechen (9) umfasst, Imprägnieren der Stapelung (26) mit einem Harz (R) und Härten des Harzes (R) hergestellt wird;
Stapeln zuerst des ersten vormontierten Blechblocks (1), dann der Reihe nach der einzelnen Bleche (2) und zuletzt des zweiten vormontierten Blechblocks (3), um einen Stapel (13) zu definieren,
Festziehen des Stapels (13),
wobei die Endplatte (5) des ersten und zweiten vormontierten Blechblocks (1, 3) dicker als jedes Blech (2, 9) ist.

2. Verfahren nach Anspruch 1, **dadurch gekennzeichnet, dass** das Festziehen das Bereitstellen von Keilstangen (15) und Verbinden des Stapels (13) mit den Keilstangen (15) umfasst.

3. Verfahren nach Anspruch 2, weiter **gekennzeichnet durch**:
Bereitstellen von Anschlüssen (16), die auf Seiten des ersten und/oder zweiten vormontierten Blechblocks (1, 3) liegen, die von den Blechen (2) abgewandt sind,
Verbinden der Anschlüsse (16) mit den Keilstangen (15).

4. Verfahren nach Anspruch 2, **dadurch gekennzeichnet, dass**
der Stapel (13) vertikal gestapelt wird,
Keilstangen (15) mit Anschlüssen (16) versehen werden, die bereits mit einem Teil davon verbunden sind wenn die Keilstangen (15) mit dem Stapel (13) verbunden werden, wobei sich die bereits mit den Keilstangen (15) verbundenen Anschlüsse (16) am Boden des Stapels (13) befinden.

5. Verfahren nach Anspruch 2, **gekennzeichnet durch** das Bereitstellen eines Gehäuses (17) um den Stapel (13).

6. Verfahren nach Anspruch 1, **dadurch gekennzeichnet, dass** das Festziehen das Bereitstellen von Zugstäben (20) durch den Stapel (13) umfasst.

7. Verfahren nach Anspruch 6, **gekennzeichnet durch**
das Bilden des Stapels (13) in einem Gehäuse (17) mit den Keilstangen (15),
das Legen von Keilen (24) zwischen die Keilstangen (15) und den ersten vormontierten Blechblock (1) und/oder die Bleche (2) und/oder den zweiten vormontierten Blechblock (3).

8. Verfahren nach Anspruch 7, **dadurch gekennzeichnet, dass** das Imprägnieren aufweist
das Einfügen der Stapel (26) in einen Tank (27),
das Erzeugen eines Vakuums (V) in dem Tank (27) und
das Bereitstellen des Harzes (R).

## Revendications

1. Procédé de fabrication d'un stator comprenant :
la fourniture d'un premier bloc de stratification pré-assemblé (1) comprenant une plaque d'extrémité (5) et une pluralité de stratifications (9), le premier bloc de stratification pré-assemblé (1) est fabriqué par empilage d'une plaque d'extrémité (5) et d'une pluralité de stratifications (9) pour former un empilage (26), imprégnation de l'empilage (26) avec une résine (R), durcissement de la résine (R),
la fourniture d'une pluralité de stratifications (2) pour définir en partie un stator,
la fourniture d'un deuxième bloc de stratification pré-assemblé (3), le deuxième bloc de stratification pré-assemblé (3) étant fabriqué par empilage d'une plaque d'extrémité (5) et d'une pluralité de stratifications (9) pour former un empilage (26), comprenant une plaque d'extrémité (5) et une pluralité de stratifications (9), imprégnation de l'empilage (26) avec une résine (R), durcissement de la résine (R) ;
l'empilage du premier bloc de stratification pré-assemblé (1) en premier, ensuite des stratifications (2) une à une, et en dernier du deuxième bloc de stratification pré-assemblé (3) pour définir une pile (13),
le serrage de la pile (13),
dans lequel la plaque d'extrémité (5) du premier et deuxième bloc de stratification pré-assemblé (1, 3) est plus épaisse que chaque stratification (2, 9).

2. Procédé selon la revendication 1, **caractérisé en ce que** le serrage comprend
la fourniture de barres clé (15),
le raccordement de la pile (13) aux barres clé (15).

3. Procédé selon la revendication 2, **caractérisé en outre par** :
la fourniture de pattes (16) reposant sur des côtés des premier et/ou deuxième blocs de stratification préassemblés (1, 3) opposées aux stratifications (2),
le raccordement des pattes (16) aux barres clé (15).

4. Procédé selon la revendication 2, **caractérisé en ce que**
la pile (13) est empilée verticalement,
des barres clé (15) sont dotées de pattes (16) déjà raccordées à une partie de celles-ci
lorsque les barres clé (15) sont raccordées à la pile (13), les pattes (16) déjà raccordées aux barres clé (15) sont situées en bas de la pile (13).

5. Procédé selon la revendication 2, **caractérisé par** la fourniture d'un carter (17) autour de la pile (13).

6. Procédé selon la revendication 1, **caractérisé en ce que** le serrage comprend la fourniture de barres de tension (20) à travers la pile (13).

7. Procédé selon la revendication 6, **caractérisé par**
la formation de la pile (13) à l'intérieur du carter (17) ayant des barres clé (15),
la mise en place de cales (24) entre les barres clé (15) et le premier bloc de stratification pré-assemblé (1) et/ou les stratifications (2) et/ou le deuxième bloc de stratification pré-assemblé (3).

8. Procédé selon la revendication 7, **caractérisé en ce que** l'imprégnation inclut
l'insertion de l'empilage (26) dans une cuve (27),
la réalisation d'un vide (V) dans la cuve (27),
la fourniture de la résine (R).
